# EUROPÄISCHE PATENTSCHRIFT

(11) **EP 1 644 209 B1**
(45) Veröffentlichungstag und Bekanntmachung des Hinweises auf die Patenterteilung: **27.02.2008**
(21) Anmeldenummer: 04728341.1
(22) Anmeldetag: 20.04.2004
(51) Int. Cl.: B60G 17/052

(54) **VERFAHREN ZUR HÖHENREGELUNG FÜR EIN FAHRZEUG**
METHOD FOR REGULATING A VEHICLE HEIGHT
PROCEDE DE REGLAGE EN HAUTEUR CONCU POUR UN VEHICULE

(30) Priorität: 04.07.2003 DE 10330432
(43) Veröffentlichungstag der Anmeldung: 12.04.2006
(73) Patentinhaber: Continental Aktiengesellschaft, 30165 Hannover (DE)
(72) Erfinder: HEIN, Dierk, 30900 Wedemark (DE); STEGMANN, Axel, 60318 Frankfurt/M. (DE); WESTERKAMP, Helge, 30966 Hemmingen (DE)
(74) Vertreter: Finger, Karsten
(86) Internationale Anmeldenummer: PCT/EP2004/004158
(87) Internationale Veröffentlichungsnummer: WO 2005/002892

(56) Entgegenhaltungen:
- EP-A- 1 256 466
- DE-A- 19 640 149
- DE-A- 19 811 982
- US-A- 4 625 994
- US-A- 4 836 511
- US-A- 5 141 245
- US-A- 5 499 845
- US-A1- 2002 175 467

## Beschreibung

Die vorliegende Erfindung betrifft ein Verfahren zur Höhenregelung für ein Fahrzeug und ein Regelungssystem zur Höhenregelung für ein Fahrzeug gemäß den Oberansprüchen der Ansprüche 1 bzw. 9.

Aus dem Stand der Technik sind Fahrzeuge mit Niveauregeleinrichtung an sich bekannt. Die Regelung der Fahrzeughöhe erfolgt dabei über Luftfedern. Bei Niveauregeleinrichtungen unterscheidet man sich zwischen offenen und geschlossenen Systemen:

In einem offenen System wird Umgebungsluft angesaugt, von einem Kompressor verdichtet und in die Luftfedern des Fahrzeugs gepumpt, bis ein gewünschtes Höhenniveau erreicht ist. Zur Verringerung des Niveaus wird Luft aus den Federn in die Umgebung abgelassen. Zur wiederholten Befüllung der Luftfedern wird wiederum Luft von außen angesaugt.

Bei einer geschlossenen Niveauregelanlage erfolgt dagegen kein Austausch von Druckmitteln mit der Umgebung. Solche geschlossenen Niveauregelanlagen sind beispielsweise aus der DE 19959556C1 und der EP 1243447A2 bekannt geworden.

Die Ermittlung der Ist-Höhe der Luftfedern erfolgt über Höhensensoren. Hierzu ist aus der DE 19811982A1 eine Luftfeder bekannt, bei der die Höhenregelung mittels eines Ultraschallsensors erfolgt. Der Ultraschallsensor dient zur Erfassung des Abstandes zwischen den beiden Enden des Luftfederbalgs, wobei der Ultraschallsensor einen Ultraschallwandler enthält, der für eine hohe Frequenz ausgelegt ist.

Aus der DE 3434660A1 ist eine Luftfeder bekannt, bei der ein Gasdrucksensor zur Erfassung und Regelung des Drucks in dem Rollbalg dient. Der Sensor besteht aus einer piezoelektrischen Folie oder Kristall, die ein Signal in Abhängigkeit von dem auf dem Sensor wirkenden Luftdruck abgibt.

Ferner ist aus der DE 4243530A1 eine Luftfeder mit einem Rollbalg und einem Höhensensor bekannt. Auf der Mantelwandung des Abrollkolbens sind Drucksensoren oder -kontakte in axialer Richtung angeordnet. Die Drucksensoren werden von der Rollfalte bei einer Abrollbewegung betätigt und die entsprechenden Ausgangssignale der Drucksensoren einer Höhenregulierung zugeführt.

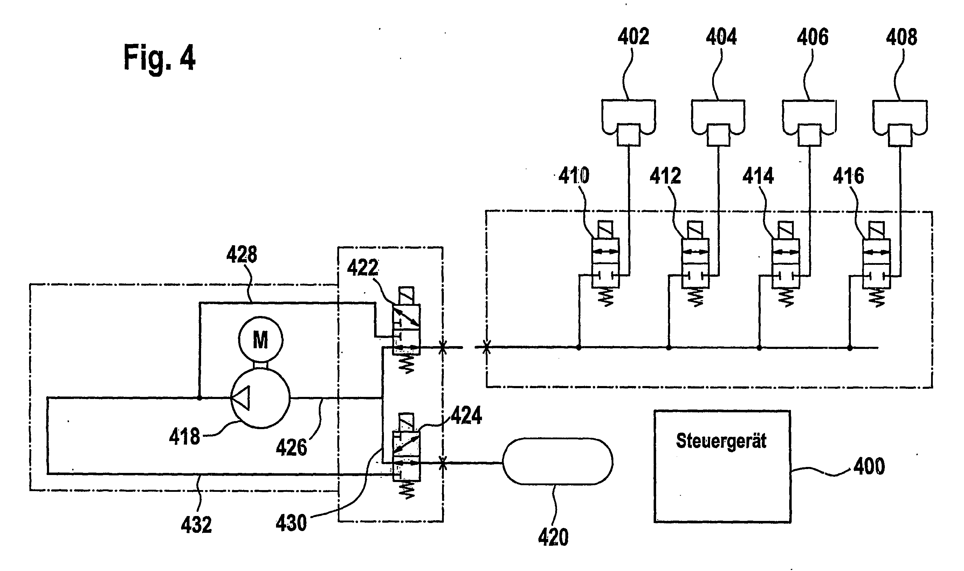

Aus der US-PS 4,625,994 ist ein Verfahren zur Höhenregelung für ein Fahrzeug bekannt, bei dem die Fahrparameter Lenkwinkel, Lenkwinkelgeschwindigkeit und Geschwindigkeit des Fahrzeuges (siehe z.B. Schritt 5 in der Figur 4a) berücksichtigt werden. Bei dem Verfahren wird zunächst überprüft, ob der Lenkwinkel des Fahrzeuges klein ist. Für den Fall, dass der Lenkwinkel klein ist, das Fahrzeug also (nahezu) geradeaus fährt, geht die Niveauregelanlage des Fahrzeugs in einen Höhenkontrollmodus. In diesem Höhenkontrollmodus wird zur Absenkung des Fahrzeugaufbaus langsam Druckluft aus den Luftfedern abgelassen bzw. zur Anhebung des Fahrzeugaufbaus langsam Druckluft in die Luftfedern überführt. Dies hat zur Folge, dass der Fahrzeugaufbau langsam abgesenkt bzw. langsam angehoben wird.

Für den Fall, dass der Lenkwinkel groß ist, das Fahrzeug also eine "starke" Kurve fährt, wird zusätzlich die Lenkwinkelgeschwindigkeit gemessen. Wenn die Lenkwinkelgeschwindigkeit einen bestimmten Grenzwert überschreitet, wird dies als Zeichen dafür gewertet, dass das Fahrzeug zum Kippen neigt. Bei einer Rechtskurve sinkt beispielsweise die linke Hälfte des Fahrzeugaufbaus stark ab, wohingegen die rechte Hälfte des Fahrzeugaufbaus stark angehoben wird. Zur Begradigung dieser Schrägstellung des Fahrzeugaufbaus werden die linken Luftfedern mit Druckluft gefüllt. Gleichzeitig werden die rechten Luftfedern entleert.

Aus der US-PS 5,141,245 ist ein gattungsgemässes Verfahren zur Höhenregelung für ein Fahrzeug bekannt, bei dem als Fahrparameter die Geschwindigkeit des Fahrzeugs berücksichtigt wird. Das Verfahren sieht vor, den Fahrzeugaufbau bei hohen Geschwindigkeiten des Fahrzeuges langsam und bei niedrigen Geschwindigkeiten des Fahrzeuges schnell abzusenken.

Demgegenüber liegt der Erfindung die Aufgabe zugrunde ein verbessertes Verfahren zur Höhenregulierung für ein Fahrzeug zu schaffen sowie ein entsprechendes Regelungssystem.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird anhand der Fahrparameter und der Ist-Höhe geprüft, ob eine Gefahrensituation oder eine Komfortsituation vorliegt, wobei bei einer Gefahrensituation eine erste Regelgeschwindigkeit und bei einer Komfortsituation eine zweite Regelgeschwindigkeit gewählt wird, wobei die erste Regelgeschwindigkeit größer als die zweite Regelgeschwindigkeit ist.

Vorzugsweise gehen dabei verschiedene Fahrparameter, wie z. B. die Fahrzeuggeschwindigkeit, der Lenkwinkel, die Gaspedalstellung sowie verschiedene Fahrzeugbeschleunigungen, z. B. Quer- und Lengsbeschleunigungen, in die Regelung ein. Ferner kann auch das Fahrzeuggewicht als Fahrparameter mitberücksichtigt werden.

Die Berücksichtigung des Fahrzeuggewichts als Fahrparameter hat den Vorteil, dass beispielsweise bei einem leichten Fahrzeug ein Überschwingen vermindert werden kann und das bei einem schweren Fahrzeug die Regelung ausreichend schnell erfolgt.

Nach einer bevorzugten Ausführungsform der Erfindung wird ein kontinuierlich steuerbares Ventil in der Regelstrecke verwendet. Über die Ventilstellung wird dabei die Regelgeschwindigkeit eingestellt. Nach einer weiteren bevorzugten Ausführungsform der Erfindung wird ein diskontinuierlich steuerbares Ventil verwendet, das also nur eine Öffnungs- und eine Schließstellung kennt. Zur Realisierung der gewünschten Regelgeschwindigkeit wird eine Schaltsequenz für das Ventil ermittelt, um in schneller Folge das Ventil zu öffnen und zu schließen. Dadurch wird das Ventil quasi-kontinuierlich angesteuert.

Nach einer weiteren bevorzugten Ausführungsform der Erfindung ist je ein Ventil für die Einstellung der Regelgeschwindigkeit für die Niveauerhöhung bzw. die Niveauemiedrigung vorhanden.

Nach einer weiteren bevorzugten Ausführungsform der Erfindung wird bei der Auf- und Abregelung des Fahrzeugniveaus ein Bypass gebildet, über den die Regelgeschwindigkeit eingestellt wird.

Ein besonderer Vorteil des erfindungsgemäßen Regelungsverfahrens ist, dass sich damit lastunabhängige Verfahrgeschwindigkeiten des Fahrzeugaufbaues realisieren lassen, da ja das Gewicht des Fahrzeugaufbaus als Fahrparameter mit in die Regelung eingehen kann. Beispielsweise kann eine bestimmte Verfahrgeschwindigkeit vorgegeben werden, die durch eine entsprechende Regelgeschwindigkeit der Regelstrecke, d. h. der Steuerung der Ventilöffnung, lastunabhängig erreicht wird. Insbesondere lässt sich so eine gleichmäßige Verfahrgeschwindigkeit für die Vorder- und die Hinterachse erreichen.

Von weiterem besonderen Vorteil ist ein verbessertes Regelverhalten durch Anpassung der Stellgrößendynamik an das Störspektrum, welches z. B. durch eine unebene Fahrbahn bedingt ist. Insgesamt lässt sich durch die Berücksichtigung verschiedener Fahrparameter die Stabilität der Höhenregelung verbessern.

Ein weiterer besonderer Vorteil der Erfindung ist, dass sich das Regelungssystem für verschiedene Fahrzeugtypen verwenden lässt. Dies ist durch die Flexibilität eines erfindungsgemäßen Regelungssystems ermöglicht, welches für verschiedene Fahrzeugtypen und Aufbaugswichte konfigurierbar ist.

Die Verwendung von kontinuierlich steuerbaren Ventilen, insbesondere proportional Magnetventilen, hat ferner den Vorteil, dass nur geringe oder keine Schaltgeräusche bei der Höhenverstellung auftreten.

Im Weiteren werden bevorzugte Ausführungsformen der Erfindung mit Bezugnahme auf die Zeichnungen näher erläutert. Es zeigen:
- Figur 1: ein Blockdiagramm einer Ausführungsform eines erfindungsgemäßen Regelungssystems,
- Figur 2: ein Flussdiagramm einer Ausführungsform eines erfindungsgemäßen Regelungsverfahrens,
- Figur 3: eine erste Ausführungsform einer geschlossenen Niveauregeleinrichtung für Fahrzeuge mit 2/2-Ventilen,
- Figur 4: eine zweite Ausführungsform einer geschlossenen Niveauregeleinrichtung für Fahrzeuge mit 3/2-Ventilen und Bypass.

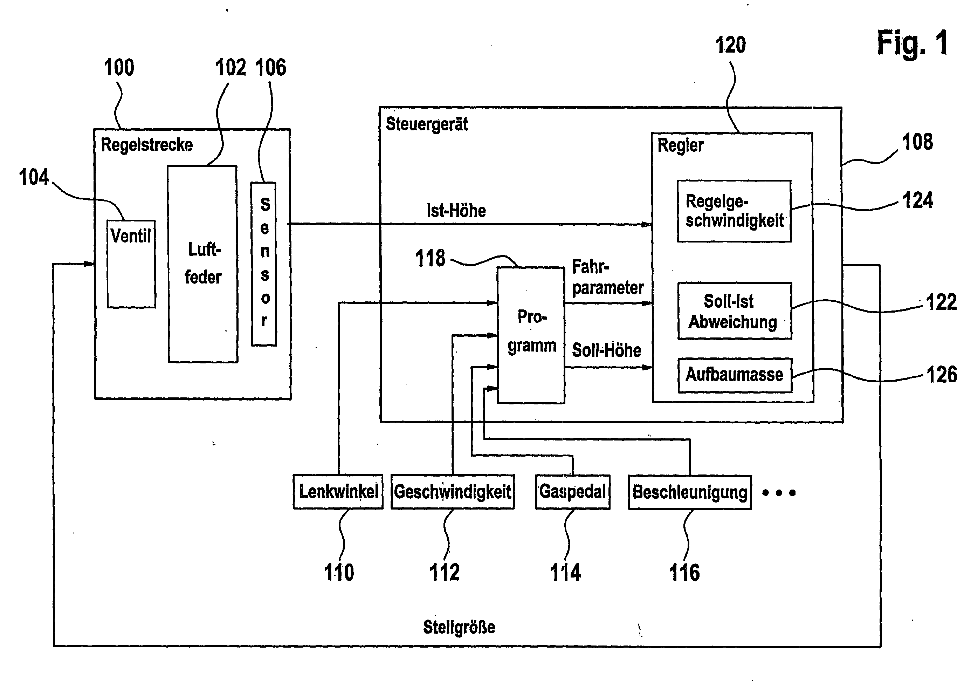

Die Figur 1 zeigt eine Regelstrecke 100. In dem hier betrachteten Beispiel beinhaltet die Regelstrecke eine Luftfeder 102, welche ein Rad eines Fahrzeugs federt. Das Niveau der Luftfeder 102 ist durch Ablassen bzw. Zuführen von Druckmittel aus bzw. in ein Arbeitsvolumen der Luftfeder 102 über ein Ventil 104 einstellbar.

Das Höhenniveau der Luftfeder 102 wird durch einen Höhensensor 106 erfaßt, der ein entsprechendes Ist-Höhensignal abgibt. In einer praktischen Ausführungsform ist eine Regelstrecke 100 für jedes Rad des Fahrzeugs realisiert.

Das Ist-Höhensignal des Höhensensors 106 wird in ein Steuergerät 108 eingegeben. Ferner erhält das Steuergerät 108 verschiedene Sensorsignale, z. B. von einem Lenkwinkelsensor 110, einem Geschwindigkeitssensor 112, einem Gaspedalstellungs-Sensor 114 und einem Beschleunigungssensor 116 sowie gegebenenfalls weiteren Sensoren für Fahrparameter. Insbesondere können auch Sensoren zur Ermittlung der Fahrzeugaufstandskräfte an den einzelnen Rädern vorhanden sein.

Das Steuergerät 108 hat ein Modul 118, welches z. B. als Computerprogramm ausgebildet sein kann. Das Modul 118 empfängt die verschiedenen Sensorsignale des Lenkwinkelsensors 110, des Geschwindigkeitssensors 112, des Gaspedalstellungs-Sensors 114, des Beschleunigungssensors 116, ... und ermittelt aus diesen Signalen entsprechende Fahrparameter. Ferner ermittelt das Modul 118 aus den Fahrparametern eine Soll-Höhe für die Luftfeder 102.

Wird beispielsweise eine Fahrsituation aufgrund der aktuellen Fahrparameter von dem Modul 118 als gefährlich erkannt, beispielsweise wenn eine Kippneigung des Fahrzeugs auftritt, wird eine geringe Soll-Höhe von dem Modul 118 ermittelt, d. h. das Fahrzeugniveau soll gesenkt werden, um die Kippgefahr zu reduzieren.

Ferner wird von dem Modul 118 beispielsweise auch dann eine reduzierte Soll-Höhe ermittelt, wenn die Geschwindigkeit des Fahrzeugs angestiegen ist. In diesem Fall wird durch die Reduzierung des Fahrzeugniveaus die Aerodynamik des Fahrzeugs verbessert und damit der Kraftstoffverbrauch reduziert.

Wenn hingegen das Modul 118 aufgrund der Fahrparameter eine Fahrt im Gelände erkennt, wird eine große Soll-Höhe von dem Modul 118 vorgegeben, um möglichst große Federwege zu ermöglichen.

Das Steuergerät 108 hat ferner einen Regler 120, in den das Ist-Höhensignal des Höhensensors 106, die von dem Modul 118 ermittelte Soll-Höhe sowie die Fahrparameter eingegeben werden. Der Regler 120 hat ein Modul 122 zur Ermittlung einer Soll-Ist-Abweichung.

Wenn die Soll-Ist-Abweichung einen bestimmten Wert überschreitet, setzt die Regelung ein. In diesem Fall wird mit Hilfe des Moduls 124 des Reglers 120 eine Regelgeschwindigkeit ermittelt. Die Ermittlung der Regelgeschwindigkeit erfolgt dabei in Abhängigkeit von den Fahrparametern, d. h. in Abhängigkeit von der Fahrzeugsituation. Wenn eine Fahrsituation aufgrund der Fahrparameter als gefährlich erkannt worden ist, wird eine schnelle Regelgeschwindigkeit gewählt, um möglichst schnell das Niveau des Fahrzeugs zu verringern. Wenn hingegen eine Komfortsituation erkannt worden ist, d. h. beispielsweise eine Verringerung der Fahrzeughöhe zur Verbesserung der aerodynamischen Eigenschaften bei allmählicher Beschleunigung, wird eine geringe Regelgeschwindigkeit gewählt, um den Komfort zu optimieren.

Um ein Überschwingen der Regelung zu reduzieren, kann in dem Speicher 126 des Reglers 120 die Aufbaumasse des Fahrzeugs gespeichert sein. Diese wird bei der Regelung in diesem Fall mitberücksichtigt.

Der Regler 120 gibt eine Stellgröße für die Regeleinheit, d. h. das Ventil 104, aus. Die Stellgröße hängt dabei von der Soll-Ist-Abweichung und von der Regelgeschwindigkeit ab.

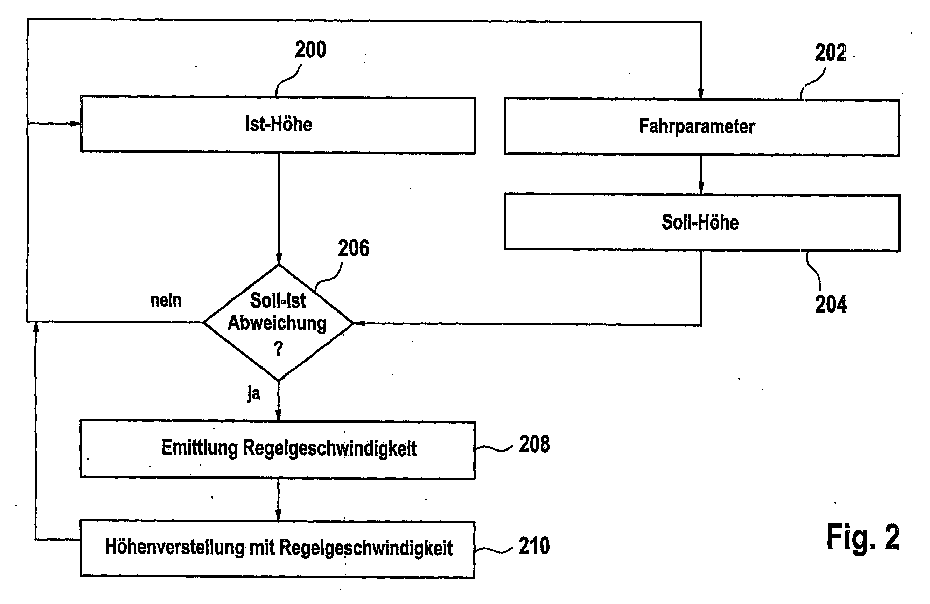

Die Figur 2 zeigt ein entsprechendes Flussdiagramm. In dem Schritt 200 wird die Ist-Höhe der Luftfeder bestimmt. Parallel hierzu werden in dem Schritt 202 die Fahrparameter des Fahrzeugs aus entsprechenden Sensorsignalen ermittelt. Auf der Grundlage dieser Fahrparameter wird in dem Schritt 204 eine Soll-Höhe festgelegt. Dies kann beispielsweise auf der Grundlage einer Bewertung der Fahrzeugsituation aufgrund der Fahrparameter erfolgen, insbesondere wenn eine Fahrzeugsituation als gefährlich erkannt worden ist.

In dem Schritt 206 wird geprüft, ob eine hinreichend große Soll-Ist-Abweichung der Höhen gegeben ist. Ist dies nicht der Fall, so geht die Ablaufsteuerung zurück zu den Schritten 200 und 202.

Im gegenteiligen Fall erfolgt in dem Schritt 208 die Ermittlung der Regelgeschwindigkeit in Abhängigkeit von den Fahrparametern bzw. der erkannten Fahrzeugsituation. Bei einer als gefährlich erkannten Fahrzeugsituation wird eine schnelle Regelung gewählt, wohingegen bei einer Komfortfahrzeugsituation eine langsame Regelung zur Optimierung des Fahrkomforts gewählt wird.

In dem Schritt 210 erfolgt die Höhenverstellung des Fahrzeugniveaus mit der in dem Schritt 208 ermittelten Regelgeschwindigkeit.

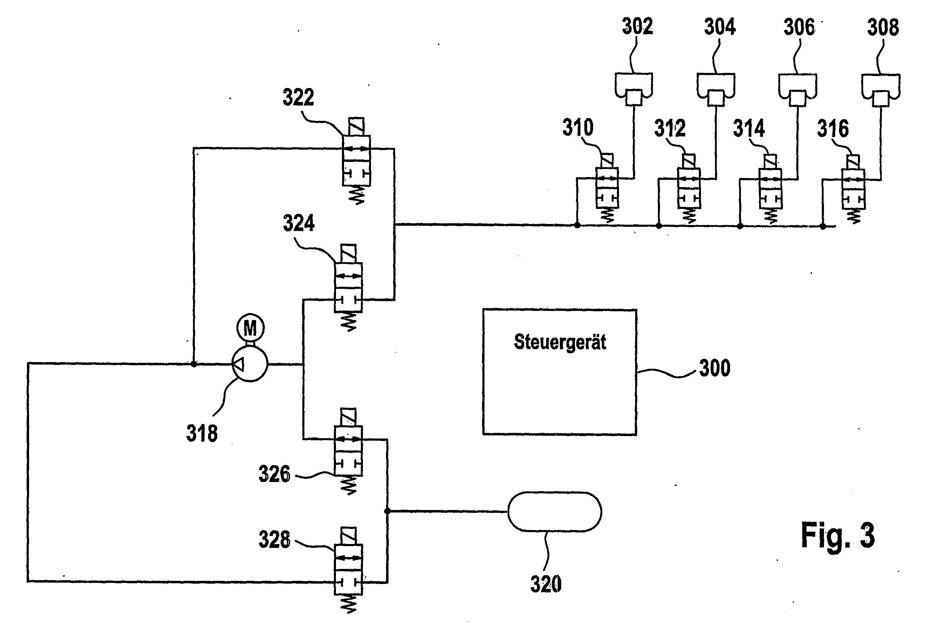

Die Figur 3 zeigt ein Ausführungsbeispiel für ein erfindungsgemäßes Regelungssystem für eine geschlossene Niveauregelung mit 2/2-Ventilen. Das Regelungssystem hat ein Steuergerät 300, welches prinzipiell gleich aufgebaut ist wie das Steuergerät 108 der Figur 1 und entsprechende Eingangssignale von Sensoren erhält, die in der Figur 3 der Übersichtlichkeit halber nicht dargestellt sind.

Die Figur 3 zeigt ferner ein geschlossenes Luftversorgungssystem für die Luftfedern 302, 304, 306 und 308 des Fahrzeugs. Die Luftfedern 302, 304, 306 und 308 sind über Ventile 310, 312, 314 und 316 an das geschlossene Luftversorgungssystem angeschlossen. Das geschlossene Luftversorgungssystem hat einen Kompressor 318 für einen Druckmittelspeicher 320 sowie steuerbare 2/2-Wegeventile 322, 324, 326 und 328.

Beispielsweise wird zum Leeren der Luftfeder 302 wie folgt vorgegangen: Das Ventil 310, das Wegeventil 324 und das Wegeventil 328 werden von dem Steuergerät 300 geöffnet, während die Ventile 322 und 326 geschlossen sind. Vorzugsweise handelt es sich bei dem Ventil 324 um ein kontinuierlich steuerbares Ventil. In diesem Fall wird über den Grad der Öffnung des Wegeventils 324, welcher von dem Steuergerät 300 als Stellgröße ermittelt worden ist, die Regeigeschwindigkeit eingestellt.

Wenn es sich bei dem Wegeventil 324 um ein diskontinuierlich einstellbares Ventil handelt, wird hingegen von dem Steuergerät 300 eine entsprechende Schaltsequenz abgegeben, um eine quasi-kontinuierliche Regelung mit der gewünschten Regelgeschwindigkeit zu realisieren.

Zur Niveauerhöhung in der Luftfeder 302 wird entsprechend vorgegangen, d. h. die Wegeventile 324 und 328 werden geschlossen, und die Wegeventile 322 und 326 werden geöffnet. Die Einstellung der Regelgeschwindigkeit erfolgt über das Wegeventil 326, welches wiederum ein kontinuierlich oder ein diskontinuierlich steuerbares Ventil sein kann.

Die Figur 4 zeigt eine weitere Ausführungsform eines Regelungssystems mit einem geschlossenen Luftversorgungssystem. Das Regelungssystem hat ein Steuergerät 400, welches prinzipiell gleich aufgebaut ist wie das Steuergerät 300 der Figur 3 und das Steuergerät 108 der Figur 1. Die entsprechenden Sensoren und Signalleitungen sind in der Figur 4 der Übersichtlichkeit halber nicht dargestellt.

Luftfedern 402, 404, 406 und 408 des Fahrzeugs sind über Ventile 410, 412, 414 bzw. 416 an das geschlossene Luftversorgungssystem angeschlossen. Das geschlossene Luftversorgungssystem hat einen Kompressor 418 und einen Druckmittelspeicher 420. In dem geschlossenen Luftversorgungssystem befinden sich ferner die 3/2-Wegeventile 422 und 424.

Die Ventile 410, 412, 414, 416 sowie die Wegeventile 422 und 424 werden von dem Steuergerät 400 zum Leeren der entsprechenden Luftfedern bzw. zur Befüllung der Luftfedern angesteuert. Bei den Wegeventilen 422 und 424 handelt es sich bevorzugt um kontinuierlich steuerbare Ventile, um eine von dem Steuergerät 400 ermittelte Regelgeschwindigkeit zu realisieren.

Zum Leeren beispielsweise der Luftfeder 402 wird das Ventil 410 geöffnet und das Wegeventil 422 so geschaltet, dass ein Luftpfad 426 über den Kompressor 418 und ein Bypass 428 für den Luftpfad 426 gebildet werden. Das Ventil 424 wird so angesteuert, dass eine Verbindung des Luftpfads 426 und des Bypasses 428 mit dem Druckmittelspeicher 420 hergestellt wird.

Die Regelgeschwindigkeit kann dabei durch Ansteuerung des Wegeventils 422 eingestellt werden, indem nämlich mehr oder weniger Luft von dem Kompressor 418 über den Bypass 428 zurück in Richtung auf das Ventil 410 bzw. die Luftfeder 402 gefördert wird.

Zur Befüllung einer der Luftfedern wird das Wegeventil 424 entsprechend so gestaltet, dass ein Luftpfad 420 sowie ein Bypass 432 über den Luftpfad 430 gebildet werden. Je nach der Ansteuerung des Wegeventils 424 strömt dabei mehr oder weniger Luft von dem Kompressor 418 über den Bypass 432 zurück in den Druckmittelspeicher 420.

### Bezugszeichenliste

- Regelstrecke: 100
- Luftfeder: 102
- Ventil: 104
- Höhensensor: 106
- Steuergerät: 108
- Lenkwinkelsensor: 110
- Geschwindigkeitssensor: 112
- Gaspedalstellungssensor: 114
- Beschleunigungssensor: 116
- Modul: 118
- Regler: 120
- Modul: 122
- Regler: 124
- Speicher: 126
- Steuergerät: 300
- Luftfeder: 302
- Luftfeder: 304
- Luftfeder: 306
- Luftfeder: 308
- Ventil: 310
- Ventil: 312
- Ventil: 314
- Ventil: 316
- Kompressor: 318
- Druckmittelspeicher: 320
- Wegeventile: 322
- Wegeventile: 324
- Wegeventile: 326
- Wegeventile: 328
- Steuergerät: 400
- Luftfeder: 402
- Luftfeder: 404
- Luftfeder: 406
- Luftfeder: 408
- Ventil: 410
- Ventil: 412
- Ventil: 414
- Ventil: 416
- Kompressor: 418
- Druckmittelspeicher: 420
- Wegeventil: 422
- Wegeventil: 424
- Luftpfad: 426
- Bypass: 428
- Luftpfad: 430
- Bypass: 432

## Patentansprüche

1. Verfahren zur Höhenregelung für ein Fahrzeug mit folgenden Schritten:
- Ermittlung von Fahrparametern,
- Ermittlung eines Soll-Wertes für die Höhe basierend auf den Fahrparametern,
- Ermittlung eines Ist-Wertes der Höhe,
- Ermittlung einer Regelgeschwindigkeit basierend auf den Fahrparametern,
- Ausgleich einer Soll-Ist-Abweichung mit der Regelgeschwindigkeit
**dadurch gekennzeichnet, dass**
- anhand der Fahrparameter und der Ist-Höhe geprüft wird, ob eine Gefahrensituation oder eine Komfortsituation vorliegt, wobei bei einer Gefahrensituation eine erste Regelgeschwindigkeit und bei einer Komfortsituation eine zweite Regelgeschwindigkeit gewählt wird, wobei die erste Regelgeschwindigkeit größer als die zweite Regelgeschwindigkeit ist.

2. Verfahren nach Anspruch 1, wobei es sich bei den Fahrparametern um einen Lenkwinkel, eine Geschwindigkeit des Fahrzeugs, eine Gaspedalstellung und/oder eine Fahrzeugbeschleunigung handelt.

3. Verfahren nach Anspruch 1 oder 2, wobei der Ist-Wert mittels eines an einer Gasfeder, insbesondere einer Luftfeder des Fahrzeugs, angeordneten Höhensensors erfolgt.

4. Verfahren nach einem der vorhergehenden Ansprüche 1 bis 3 wobei es sich bei der Regelgeschwindigkeit um eine Verfahrgeschwindigkeit der Höhe des Fahrzeugs handelt.

5. Verfahren nach einem der vorhergehenden Ansprüche 1 bis 4, wobei der Ausgleich der Soll-Ist-Abweichung mit der Regelgeschwindigkeit über ein kontinuierlich steuerbares Ventil erfolgt.

6. Verfahren nach einem der vorhergehenden Ansprüche 1 bis 5, wobei der Ausgleich der Soll-Ist-Abweichung mit der Regelgeschwindigkeit durch Anlegen einer Schaltsequenz an ein diskontinuierlich steuerbares Ventil erfolgt.

7. Verfahren nach einem der vorhergehenden Ansprüche 1 bis 6, wobei ein erstes Ventil zur Vergrößerung der Höhe und ein zweites Ventil zur Verringerung der Höhe angesteuert wird.

8. Verfahren nach einem der vorhergehenden Ansprüche 1 bis 7, wobei zur Einstellung der Regelgeschwindigkeit ein Bypass gebildet wird.

9. Regelungssystem zur Höhenregelung für ein Fahrzeug mit:
- Mitteln (108, 118; 300; 400) zur Ermittlung von Fahrparametern,
- Mitteln (108, 118; 300; 400) zur Ermittlung eines Soll-Wertes der Höhe basierend auf den Fahrparametern,
- Mitteln (106) zur Eingabe eines Ist-Wertes der Höhe,
- Mitteln (120, 124) zur Ermittlung einer Regelgeschwindigkeit basierend auf den Fahrparametem, **dadurch gekennzeichnet, dass**
- anhand der Fahrparameter und der Ist-Höhe geprüft wird, ob eine Gefahrensituation oder eine Komfortsituation vorliegt, wobei bei einer Gefahrensituation eine erste Regelgeschwindigkeit und bei einer Komfortsituation eine zweite Regelgeschwindigkeit gewählt wird, wobei die erste Regelgeschwindigkeit größer als die zweite Regelgeschwindigkeit ist,
- Mitteln (120) zur Ansteuerung einer Regelstrecke (100) zum Ausgleich der Soll-Ist-Abweichung mit der Regelgeschwindigkeit.

10. Regelungssystem nach Anspruch 9, wobei die Mittel zur Ermittlung von Fahrparametern zum Anschluss an Sensoren (110, 112, 114, 116, ...) für die Fahrparameter ausgebildet sind.

11. Regelungssystem nach Anspruch 9 oder 10, wobei die Regelstrecke zumindest ein Ventil (104; 324, 326; 422; 424) für eine Gasfeder (102; 302, 304, 306, 308; 402, 404, 406, 408), insbesondere eine Luftfeder, beinhaltet.

12. Regelungssystem nach Anspruch 11, wobei es sich bei dem Ventil um ein kontinuierlich steuerbares Ventil handelt.

13. Regelungssystem nach Anspruch 11, wobei es sich bei dem Ventil um ein diskontinuierlich steuerbares Ventil handelt und die Mittel zur Ansteuerung der Regelstrecke zur Abgabe einer Schaltsequenz für das diskontinuierlich steuerbare Ventil ausgebildet sind.

## Claims

1. Method for controlling the height of a vehicle having the following steps:
- acquisition of driving parameters,
- acquisition of a setpoint value for the height based on the driving parameters,
- acquisition of an actual value of the height,
- acquisition of a control speed based on the driving parameters,
- compensation of a setpoint/actual error with the control speed,
**characterized in that**
- the driving parameters and the actual height are used to check whether a hazardous situation or a comfort situation is present, wherein in the event of a hazardous situation a first control speed is selected, and in the event of a comfort situation a second control speed is selected, wherein the first control speed is higher than the second control speed.

2. Method according to Claim 1, wherein the driving parameters are a steering angle, a speed of the vehicle, an accelerator pedal position and/or an acceleration of the vehicle.

3. Method according to Claim 1 or 2, wherein the actual value is provided by means of a vertical sensor which is arranged on a pneumatic spring, in particular an air spring of the vehicle.

4. Method according to one of the preceding Claims 1 to 3, wherein the control speed is a movement speed of the height of the vehicle.

5. Method according to one of the preceding Claims 1 to 4, wherein the compensation of the setpoint/actual error with the control speed is carried out by means of a continuously controllable valve.

6. Method according to one of the preceding Claims 1 to 5, wherein the compensation of the setpoint/actual error with the control speed is carried out by applying a switching sequence to a discontinuously controllable valve.

7. Method according to one of the preceding Claims 1 to 6, wherein a first valve is actuated to increase the height, and a second valve is actuated to decrease the height.

8. Method according to one of the preceding Claims 1 to 7, wherein in order to adjust the control speed a bypass is formed.

9. Control system for controlling the height of a vehicle, having:
- means (108, 118; 300; 400) for acquiring driving parameters,
- means (108, 118; 300; 400) for acquiring a setpoint value of the height based on the driving parameters,
- means (106) for inputting an actual value of the height,
- means (120, 124) for acquiring a control speed on the basis of the driving parameters, **characterized in that**
- the driving parameters and the actual height are used to check whether a hazardous situation or a comfort situation is present, wherein in the event of a hazardous situation a first control speed is selected, and in the event of a comfort situation a second control speed is selected, wherein the first control speed is higher than the second control speed,
- means (120) for actuating a controlled system (100) for compensating the setpoint/actual error with the control speed.

10. Control system according to Claim 9, wherein the means for acquiring driving parameters are designed for connection to sensors (110, 112, 114, 116, ...) for the driving parameters.

11. Control system according to Claim 9 or 10, wherein the controlled system contains at least one valve (104; 324, 326; 422; 424) for a pneumatic spring (102; 302, 304, 306, 308; 402, 404, 406, 408), in particular an air spring.

12. Control system according to Claim 11, wherein the valve is a continuously controllable valve.

13. Control system according to Claim 11, wherein the valve is a discontinuously controllable valve, and the means for actuating the controlled system are designed to output a switching sequence for the discontinuously controllable valve.

## Revendications

1. Procédé de régulation en hauteur pour un véhicule comprenant les étapes suivantes :
- détermination de paramètres de déplacement,
- détermination d'une valeur de consigne pour la hauteur en se basant sur les paramètres de déplacement,
- détermination d'une valeur réelle de la hauteur,
- détermination d'une vitesse de régulation en se basant sur les paramètres de déplacement,
- compensation d'un écart consigne/réel avec la vitesse de régulation
**caractérisé en ce que**
- un contrôle est réalisé au moyen des paramètres de déplacement et de la hauteur réelle pour vérifier s'il existe une situation de danger ou une situation de confort, une première vitesse de régulation étant sélectionnée dans le cas d'une situation de danger et une deuxième vitesse de régulation dans le cas d'une situation de confort, la première vitesse de régulation étant supérieure à la deuxième vitesse de régulation.

2. Procédé selon la revendication 1, les paramètres de déplacement étant un angle de direction, une vitesse du véhicule, une position de la pédale des gaz et/ou une accélération du véhicule.

3. Procédé selon la revendication 1 ou 2, la valeur réelle étant déterminée au moyen d'un détecteur de hauteur monté sur une suspension à gaz comprimé, notamment une suspension pneumatique du véhicule.

4. Procédé selon l'une des revendications précédentes 1 à 3, la vitesse de régulation étant une vitesse d'atteinte de la hauteur du véhicule.

5. Procédé selon l'une des revendications précédentes 1 à 4, la compensation de l'écart consigne/réel à la vitesse de régulation étant réalisée par le biais d'une vanne à commande continue.

6. Procédé selon l'une des revendications précédentes 1 à 5, la compensation de l'écart consigne/réel à la vitesse de régulation étant réalisée en appliquant une séquence de commutation à une vanne à commande discontinue.

7. Procédé selon l'une des revendications précédentes 1 à 6, une première vanne étant commandée pour augmenter la hauteur et une deuxième vanne pour diminuer la hauteur.

8. Procédé selon l'une des revendications précédentes 1 à 7, un bipasse étant formé pour régler la vitesse de régulation.

9. Système de régulation de la hauteur d'un véhicule comprenant :
- des moyens (108, 118 ; 300 ; 400) pour déterminer des paramètres de déplacement,
- des moyens (108, 118 ; 300 ; 400) pour déterminer une valeur de consigne de la hauteur en se basant sur les paramètres de déplacement,
- des moyens (106) pour saisir une valeur réelle de la hauteur,
- des moyens (120, 124) pour déterminer une vitesse de régulation en se basant sur les paramètres de déplacement,
**caractérisé en ce que**
- un contrôle est réalisé au moyen des paramètres de déplacement et de la hauteur réelle pour vérifier s'il existe une situation de danger ou une situation de confort, une première vitesse de régulation étant sélectionnée dans le cas d'une situation de danger et une deuxième vitesse de régulation dans le cas d'une situation de confort, la première vitesse de régulation étant supérieure à la deuxième vitesse de régulation,
- des moyens (120) pour commander une chaîne de régulation (100) en vue de compenser l'écart consigne/réel avec la vitesse de régulation.

10. Système de régulation selon la revendication 9, les moyens pour déterminer les paramètres de déplacement étant conçus pour être raccordés à des capteurs (110, 112, 114, 116, ...) pour les paramètres de déplacement.

11. Système de régulation selon la revendication 9 ou 10, la chaîne de régulation contenant au moins une vanne (104 ; 324, 326 ; 422 ; 424) pour une suspension à gaz comprimé (102 ; 302, 304, 306, 308 ; 402, 404, 406, 408), notamment pour une suspension pneumatique.

12. Système de régulation selon la revendication 11, la vanne étant une vanne à commande continue.

13. Système de régulation selon la revendication 11, la vanne étant une vanne à commande discontinue et les moyens de commande de la chaîne de régulation étant conçus pour délivrer une séquence de commutation pour la vanne à commande discontinue.
